# EUROPEAN PATENT SPECIFICATION

(11) **EP 3 174 355 B1**
(45) Date of publication and mention of the grant of the patent: **21.08.2019**
(21) Application number: 14898889.2
(22) Date of filing: 31.07.2014
(51) Int. Cl.: H04W 72/12, H04L 5/00, H04L 5/14

(54) **METHOD AND DEVICE FOR DETERMINING DATA TRANSMISSION**
VERFAHREN UND VORRICHTUNG ZUR BESTIMMUNG VON DATENÜBERTRAGUNG
PROCÉDÉ ET DISPOSITIF POUR DÉTERMINER UNE TRANSMISSION DE DONNÉES

(43) Date of publication of application: 31.05.2017
(73) Proprietor: Huawei Technologies Co., Ltd., Longgang District Shenzhen, Guangdong 518129 (CN)
(72) Inventor: LI, Bingzhao, Shenzhen Guangdong 518129 (CN); YANG, Xiaodong, Shenzhen Guangdong 518129 (CN); QUAN, Wei, Shenzhen Guangdong 518129 (CN); ZHANG, Jian, Shenzhen Guangdong 518129 (CN)
(74) Representative: Goddar, Heinz J.
(86) International application number: PCT/CN2014/083490
(87) International publication number: WO 2016/015317

(56) References cited:
- WO-A1-2013/006988
- CN-A- 103 312 462
- CN-A- 103 458 513
- CN-A- 103 906 243
- US-A1- 2014 064 237
- INTEL CORPORATION: "Transition time reduction for small cell on/off", 3GPP DRAFT; R1-142026, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Seoul, Korea; 20140519 - 20140523 18 May 2014 (2014-05-18), XP050787623, Retrieved from the Internet: URL:http://www.3gpp.org/ftp/Meetings_3GPP_ SYNC/RAN1/Docs/ [retrieved on 2014-05-18]
- ALCATEL-LUCENT SHANGHAI BELL ET AL: "Discussion on timing issues with dynamic TDD UL-DL configuration", 3GPP DRAFT; R1-122510 DISCUSSION ON TIMING ISSUES WITH DYNAMIC TDD UL-DL CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20120521 - 20120525, 12 May 2012 (2012-05-12), XP050601080, [retrieved on 2012-05-12]
- NTT DOCOMO: "HARQ Design for eIMTA", 3GPP DRAFT; R1-131419 EIMTA HARQ, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chicago, USA; 20130415 - 20130419 6 April 2013 (2013-04-06), XP050697264, Retrieved from the Internet: URL:http://www.3gpp.org/ftp/tsg_ran/WG1_RL 1/TSGR1_72b/Docs/ [retrieved on 2013-04-06]

## Description

### TECHNICAL FIELD

The present invention relates to the field of mobile communications technologies, and in particular, to a method and an apparatus for determining data transmission.

### BACKGROUND

In a communications network based on an Long Term Evolution-time division duplex(LTE-TDD) system, multiple base stations use a same frequency resource, that is, transmit data by using one carrier. Data is transmitted between a base station and user equipment(UE) in different subframes in a TDD frame. An uplink subframe in the TDD frame is used to transmit uplink data, and a downlink subframe in the TDD frame is used to transmit downlink data.

In the prior art, when different base stations use one secondary component carrier to transmit data, these base stations need to contend with each other to obtain a time segment in which the base stations can transmit the data on the secondary component carrier. After a base station obtains a time segment in which the base station can transmit data, the base station may transmit scheduling information to UE according to a preset uplink-downlink configuration (indicating a proportion of uplink subframes to downlink subframes in one TDD frame) of a TDD frame of the secondary component carrier by using a physical downlink control channel(PDCCH) in a downlink subframe that is used to transmit the scheduling information. After receiving the scheduling information transmitted by the base station, the UE may transmit uplink data to the base station in some uplink subframes according to the uplink-downlink configuration and the scheduling information. The base station transmits, according to the uplink-downlink configuration and a situation about receiving the uplink data, feedback information corresponding to the situation about receiving the uplink data to the UE in a downlink subframe that is used to transmit the feedback information. Then, the UE determines, according to the feedback information corresponding to the situation about receiving the uplink data, whether to retransmit the uplink data in uplink subframes in a next TDD frame that have same numbers with the some uplink subframes.

However, multiple time segments that a base station obtains by means of contention may be inconsecutive. Therefore, if the foregoing downlink subframe that is used to transmit the scheduling information is located in a time segment that cannot be used by the base station, and the uplink subframe in which the UE transmits the uplink data to the base station is located in a time segment that can be used by the base station, the UE cannot transmit the uplink data to the base station in the uplink subframe that is in the time segment that can be used by the base station, because the base station cannot deliver the scheduling information to the UE. If the foregoing downlink subframe that is used to transmit the feedback information is located in a time segment that cannot be used by the base station, after the UE transmits the uplink data to the base station, the base station cannot transmit the feedback information corresponding to the situation about receiving the uplink data to the UE. As a result, the base station cannot normally communicate with the UE, and communication efficiency between the base station and the UE is reduced.
Intel Corporation: "Transmission time reduction for small cell on/off', 3GPP draft Ri-142026 discloses a schedule operation PDCCH which supports small cell on/off in subframe level as long as additional UE behaviors are defined, e.g., UE does not perform RRM/CQI measurement in non-scheduled subframes.

### SUMMARY

The present invention provides a communication device according to claim 1, and a method for determining data transmission according to claim 6. Possible implementation manners are disclosed in the dependent claims. In the following description, embodiments not falling under the scope of the attached claims shall be considered as an example not covered by the invention.

The description discloses a method and an apparatus for determining data transmission. If a communication device determines that a current subframe belongs to a first time segment, the communication device determines data transmission of the current subframe, where the first time segment is a time segment in which scheduling is allowed on a secondary component carrier, that is, a time segment in which a frequency resource is available. By determining that normal data transmission can be performed in all subframes in the time segment in which a frequency resource is available, the communication device ensures normal communication between a base station and UE, thereby improving communication efficiency between the base station and the UE.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a first schematic structural diagram of a subframe according to the prior art;
FIG. 2 is a first schematic structural diagram of a communication device according to an embodiment of the present invention;
FIG. 3 is a second schematic structural diagram of a communication device according to an embodiment of the present invention;
FIG. 4 is a third schematic structural diagram of a communication device according to an embodiment of the present invention;
FIG. 5 is a fourth schematic structural diagram of a communication device according to an embodiment of the present invention;
FIG. 6 is a fifth schematic structural diagram of a communication device according to an embodiment of the present invention;
FIG. 7 is a sixth schematic structural diagram of a communication device according to an embodiment of the present invention;
FIG. 8 is a first flowchart of a method for determining data transmission according to an embodiment of the present invention;
FIG. 9 is a second schematic structural diagram of a subframe according to an embodiment of the present invention;
FIG. 10 is a second flowchart of a method for determining data transmission according to an embodiment of the present invention;
FIG. 11 is a third flowchart of a method for determining data transmission according to an embodiment of the present invention;
FIG. 12 is a third schematic structural diagram of a subframe according to an embodiment of the present invention;
FIG. 13 is a fourth flowchart of a method for determining data transmission according to an embodiment of the present invention;
FIG. 14 is a fifth flowchart of a method for determining data transmission according to an embodiment of the present invention;
FIG. 15 is a sixth flowchart of a method for determining data transmission according to an embodiment of the present invention;
FIG. 16 is a fourth schematic structural diagram of a subframe according to an embodiment of the present invention; and
FIG. 17 is a seventh flowchart of a method for determining data transmission according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. The protection scope of the present invention is limited only by the protection scope of the appended claims.

Various technologies described in this specification may be applied to various wireless communications systems, for example, current 2G and 3G communications systems and a next-generation communications system, for example, a global system for mobile communications(GSM), a code division multiple access(CDMA) system, a time division multiple access(TDMA) system, wideband code division multiple access(WCDMA), a frequency division multiple access(FDMA) system, an orthogonal frequency-division multiple access(OFDMA) system, a single-carrier FDMA (SC-FDMA) system, a general packet radio service (GPRS) system, a long term evolution (LTE) system, and other communications systems.

UE may be a wireless terminal. The wireless terminal may refer to a device that provides a user with voice and/or data connectivity, a handheld device with a radio connection function, or another processing device connected to a radio modem. The wireless terminal may communicate with one or more core networks through a radio access network (such as RAN, radio access network). The wireless terminal may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network. For example, it may be a device such as a personal communication service (PCS) phone, a cordless telephone set, a Session Initiation Protocol (SIP) phone, a wireless local loop (WLL) station, or a personal digital assistant (PDA). The wireless terminal may also be called a system, a subscriber unit (subscriber unit), a subscriber station (subscriber station), a mobile station (mobile station), a mobile terminal (mobile), a remote station (remote station), an access point (access point), a remote terminal (remote terminal), an access terminal (access terminal), a user terminal (user terminal), a user agent (user agent), or user equipment (user device).

A base station may by an evolved Node B(eNB), an radio network controller(RNC), or a base station controller(BSC), namely, an access network device.

Specifically, a packet switched(PS) domain in a mobile communications system is used as an example. In 3G, the base station is the RNC. In 4G (4th Generation, the fourth generation of mobile communication technology), the base station is the eNB. In 2G (2rd Generation, the second generation of mobile communication technology), the base station is the BSC. A CS (Circuit Switch, circuit switched) domain in the mobile communications system is used as an example. In 3G/2G, the base station is the RNC (3G)/the BSC (2G).

An LTE-TDD system may support different uplink-downlink configurations (indicating a proportion of uplink subframes to downlink subframes in one TDD frame). Corresponding to the different uplink-downlink configurations, the base station may set a different timing relationship for scheduling scheduling information corresponding to uplink data, a different timing relationship for feeding back feedback information corresponding to the uplink data, and a different timing relationship for retransmitting the scheduling information corresponding to the uplink data. In different uplink-downlink configurations, the base station transmits, according to the set timing relationship of the scheduling information, the uplink data in an uplink subframe that meets the timing relationship of the scheduling information with a downlink subframe that is used to transmit the scheduling information; and transmits, according to the set timing relationship of the feedback information, the feedback information in a downlink subframe that meets the feedback timing relationship with an uplink subframe that is used to transmit the uplink data.

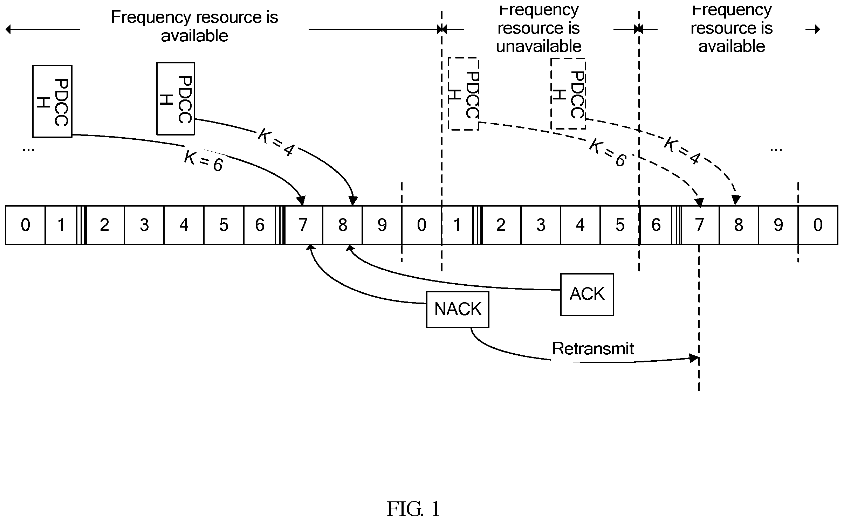

Exemplarily, as shown in FIG. 1, that an uplink-downlink configuration in a TDD frame supported by a carrier is downlink:uplink=3:2 is used as an example. A subframe numbered 2, a subframe numbered 3, a subframe numbered 7, and a subframe numbered 8 are uplink subframes; and a subframe numbered 0, a subframe numbered 1, a subframe numbered 4, a subframe numbered 5, a subframe numbered 6, and a subframe numbered 9 are downlink subframes. According to the uplink-downlink configuration, a base station sends, to UE in the first subframe numbered 1, scheduling information for scheduling the first subframe numbered 7, and sends, to the UE in the first subframe numbered 4, scheduling information for scheduling the first subframe numbered 8. The UE separately sends, according to the scheduling information, uplink data to the base station in the first subframe numbered 7 and the first subframe numbered 8. The base station sends, to the UE, feedback information in the second subframe numbered 1 and feedback information in the second subframe numbered 4. The UE determines, according to the feedback information, whether to separately resend the uplink data to the base station in the second subframe numbered 7 and the second subframe numbered 8. In FIG. 1, it can be seen that, that the base station does not correctly receive the uplink data sent by the UE in the first subframe numbered 7 is fed back in the second subframe numbered 1, and the feedback information of the second subframe numbered 1 is NACK; that the base station correctly receives the uplink data sent by the UE in the first subframe numbered 8 is fed back in the second subframe numbered 4, and the feedback information of the second subframe numbered 4 is ACK.

It should be noted that, a K in FIG. 1 is a timing advance between two subframes that meet a mapping relationship. For example, when the mapping relationship is a scheduling relationship, a timing advance between the first subframe numbered 1 and the first subframe numbered 7 is K=6, that is, the subframe numbered 7 whose subframe number differs by 6 from a subframe number of the first subframe numbered 1 is scheduled in the first subframe numbered 1, that is 1+6=7. The base station sends, by using a PDCCH in the first subframe numbered 1, the scheduling information for scheduling the first subframe numbered 7.

### Embodiment 1

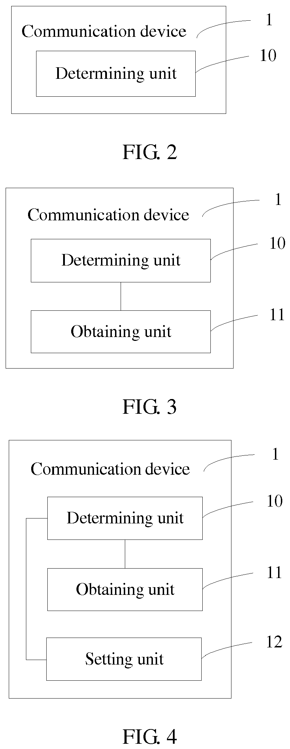

As shown in FIG. 2, this embodiment of the present invention provides a communication device 1, where the communication device 1 may include:
a determining unit 10, configured to: determine that a current subframe belongs to a first time segment, where the first time segment is a time segment in which scheduling is allowed on a secondary component carrier; and determine data transmission of the current subframe.

Optionally, the determining unit 10 is specifically configured to determine that the current subframe belongs to the first time segment, and a subframe 1 that meets a preset mapping relationship with the current subframe belongs to a second time segment, where the second time segment is a time segment in which scheduling is stopped on the secondary component carrier.

Optionally, as shown in FIG. 3, the communication device 1 further includes an obtaining unit 11.

The obtaining unit 11 is configured to obtain a first uplink-downlink configuration before the determining unit 10 determines that the current subframe belongs to the first time segment and the subframe 1 that meets the preset mapping relationship with the current subframe belongs to the second time segment.

Optionally, the mapping relationship is a scheduling relationship.

The determining unit 10 is specifically configured to: determine, according to the first uplink-downlink configuration obtained by the obtaining unit 11, that the current subframe is a first uplink subframe and the subframe 1 is a first downlink subframe that meets the scheduling relationship with the first uplink subframe; determine, according to the first time segment and the second time segment that are obtained by the obtaining unit 11, that the first uplink subframe is an uplink subframe in the first time segment and the first downlink subframe is a downlink subframe in the second time segment; and determine to transmit downlink data in the first uplink subframe.

Optionally, as shown in FIG. 4, the communication device 1 further includes a setting unit 12.

The determining unit 10 is specifically configured to determine that the current subframe is the first subframe in the first time segment.

The setting unit 12 is configured to set a subframe number of the first subframe determined by the determining unit 10 to a second subframe number, where the second subframe number is used to represent that the first subframe or a subframe 1 that meets a preset mapping relationship with the first subframe belongs to the first time segment.

The determining unit 10 is specifically configured to determine data transmission of the first subframe according to the second subframe number set by the setting unit 12.

Optionally, as shown in FIG. 3, the communication device 1 further includes an obtaining unit 11.

The obtaining unit 11 is configured to obtain a second uplink-downlink configuration before the determining unit 10 determines the data transmission of the current subframe.

The determining unit 10 is specifically configured to determine the data transmission of the first subframe according to the second subframe number set by the setting unit 12 and the second uplink-downlink configuration obtained by the obtaining unit 11.

Optionally, as shown in FIG. 3, the communication device 1 further includes an obtaining unit 11.

The obtaining unit 11 is configured to obtain a second uplink-downlink configuration before the determining unit 10 determines the data transmission of the current subframe.

The determining unit 10 is specifically configured to: determine that the current subframe is the first subframe in the first time segment, and determine data transmission of the first subframe according to the second uplink-downlink configuration obtained by the obtaining unit 11.

Optionally, the communication device is UE, and the mapping relationship is a feedback relationship.

The determining unit 10 is specifically configured to determine, according to the first time segment and the second time segment that are obtained by the obtaining unit 11, that the first uplink subframe is an uplink subframe in the first time segment and the second downlink subframe is a downlink subframe in the second time segment.

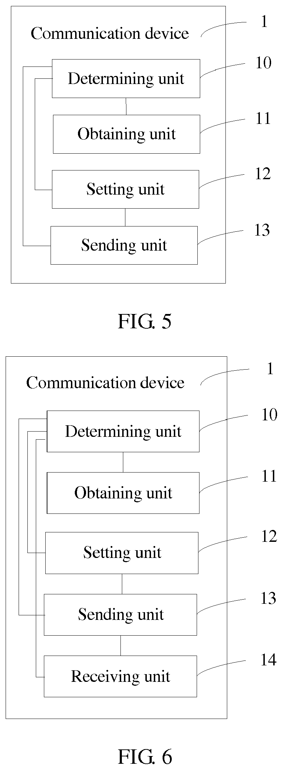

Correspondingly, as shown in FIG. 5, when the communication device 1 is UE, the communication device 1 further includes a sending unit 13.

The sending unit 13 is configured to: send uplink data to a base station in the first uplink subframe determined by the determining unit 10, and store the uplink data in a transmission cache.

The determining unit 10 is further configured to determine that the base station correctly receives the uplink data sent by the sending unit 13.

Optionally, the determining unit 10 is further configured to: after determining that the base station does not correctly receive the uplink data sent by the sending unit 13, determine a CIF carried in scheduling information that is received in a third downlink subframe, where the CIF carries a process ID of the uplink data; and determine, according to the process ID, that the sending unit 13 sends the uplink data to the base station in a third uplink subframe, where the third downlink subframe is a downlink subframe that is after the second downlink subframe and in which the third uplink subframe is scheduled, and the third uplink subframe is an uplink subframe that is in the first time segment and after the first uplink subframe and whose subframe number is closest to a subframe number of the first uplink subframe.

Optionally, the communication device 1 is a base station, and the mapping relationship is a feedback relationship.

The determining unit 10 is specifically configured to determine that the current subframe is a first uplink subframe, the subframe 1 is a second downlink subframe in which feedback information corresponding to the first uplink subframe is located, and the second downlink subframe is a downlink subframe in the second time segment.

Optionally, as shown in FIG. 6, when the communication device 1 is a base station, the communication device 1 further includes a receiving unit 14.

The determining unit 10 is further configured to: after the receiving unit 14 correctly receives the uplink data in the first uplink subframe, determine to skip sending the feedback information to the UE in the second downlink subframe.

Optionally, the determining unit 10 is further configured to: if the receiving unit 14 does not correctly receive the uplink data in the first uplink subframe, determine that the sending unit 13 sends scheduling information in a third downlink subframe, where the scheduling information is used to schedule a third uplink subframe, the scheduling information carries a CIF, and the CIF carries a process ID of the uplink data.

Optionally, the communication device 1 is UE or a base station.

This embodiment of the present invention provides a communication device. If the communication device determines that a current subframe belongs to a first time segment, the communication device determines data transmission of the current subframe, where the first time segment is a time segment in which scheduling is allowed on a secondary component carrier, that is, a time segment in which a frequency resource is available. By determining that normal data transmission can be performed in all subframes in the time segment in which a frequency resource is available, the communication device ensures normal communication between a base station and UE, thereby improving communication efficiency between the base station and the UE.

### Embodiment 2

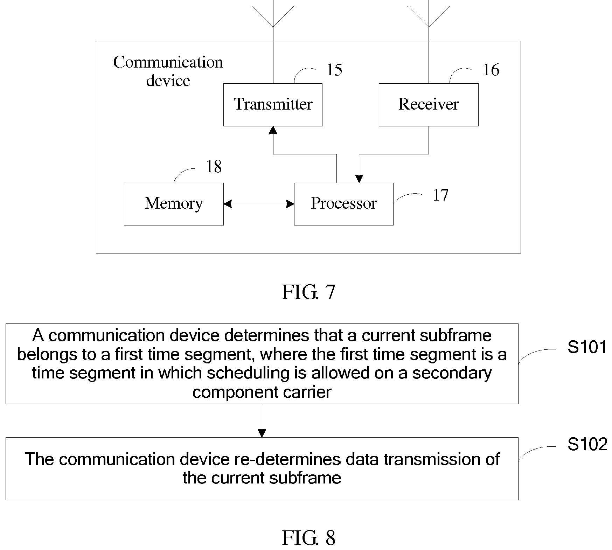

As shown in FIG. 7, this embodiment of the present invention provides a communication device, including: a transmitter 15, a receiver 16, a processor 17, and a memory 18. All of the transmitter 15, the receiver 16, and the memory 18 are connected to the processor 17, for example, all of the transmitter 15, the receiver 16, and the memory 18 may be connected to the processor 17 by using a bus.

The receiver 16 and the transmitter 15 may be integrated to form a transceiver.

The memory 18 is configured to store executable program code, where the program code includes a computer operation instruction. The memory 18 may include a high-speed RAM memory, and may further include a non-volatile memory (non-volatile memory), such as at least one magnetic disk memory.

The processor 17 may be a central processing unit or an application-specific integrated circuit, or is configured as one or more integrated circuits that implement the embodiment of the present invention.

Specifically, the processor 17 may be configured to determine that a current subframe belongs to a first time segment, where the first time segment is a time segment in which scheduling is allowed on a secondary component carrier, and determine data transmission of the current subframe; the transmitter 15 may be configured to send data; the receiver 16 may be configured to receive the data; and the memory 18 may be configured to store software code of information about the time segment in which scheduling is allowed on the secondary component carrier and a software program that controls the communication device to complete the foregoing process, so that the processor 17 completes the foregoing process by executing the foregoing software program and invoking the foregoing software code.

Optionally, the processor 17 is specifically configured to determine that the current subframe belongs to the first time segment, and a subframe 1 that meets a preset mapping relationship with the current subframe belongs to a second time segment, where the second time segment is a time segment in which scheduling is stopped on the secondary component carrier.

Optionally, the processor 17 is further configured to obtain a preset first uplink-downlink configuration before determining that the current subframe belongs to the first time segment and the subframe 1 that meets the preset mapping relationship with the current subframe belongs to the second time segment.

Optionally, the mapping relationship is a scheduling relationship.

The processor 17 is specifically configured to: determine, according to the first uplink-downlink configuration, that the current subframe is a first uplink subframe and the subframe 1 is a first downlink subframe that meets the scheduling relationship with the first uplink subframe; determine, according to the first time segment and the second time segment, that the first uplink subframe is an uplink subframe in the first time segment and the first downlink subframe is a downlink subframe in the second time segment; and determine to transmit downlink data in the first uplink subframe.

Optionally, the processor 17 is specifically configured to: determine that the current subframe is the first subframe in the first time segment; set a subframe number of the first subframe to a preset second subframe number, where the second subframe number is used to represent that the first subframe or a subframe 1 that meets a preset mapping relationship with the first subframe belongs to the first time segment; and determine data transmission of the first subframe according to the second subframe number.

Optionally, the processor 17 is further configured to obtain a second uplink-downlink configuration before determining the data transmission of the current subframe.

The processor 17 is specifically configured to determine the data transmission of the first subframe according to the second subframe number and the second uplink-downlink configuration.

Optionally, the processor 17 is further configured to: before determining the data transmission of the current subframe, obtain a second uplink-downlink configuration, determine that the current subframe is the first subframe in the first time segment, and determine data transmission of the first subframe according to the second uplink-downlink configuration.

Optionally, the communication device is the UE, and the mapping relationship is a feedback relationship.

The processor 17 is specifically configured to determine, according to the first time segment and the second time segment, that the first uplink subframe is an uplink subframe in the first time segment and the second downlink subframe is a downlink subframe in the second time segment.

Correspondingly, when the communication device is the UE, the transmitter 15 is further configured to: send uplink data to a base station in the first uplink subframe determined by the processor 17, and store the uplink data in a transmission cache.

The processor 17 is further configured to determine that the base station correctly receives the uplink data sent by the transmitter 15.

Optionally, the communication device is UE.

The processor 17 is further configured to: after determining that the base station does not correctly receive the uplink data, determine a carrier indicator field CIF carried in scheduling information that is received in a third downlink subframe, where the CIF carries a process ID of the uplink data; and determine, according to the process ID, that the transmitter 15 sends the uplink data to the base station in the first uplink subframe, where the third downlink subframe is a downlink subframe that is after the second downlink subframe and in which the third uplink subframe is scheduled, and the third uplink subframe is an uplink subframe that is in the first time segment and after the first uplink subframe and whose subframe number is closest to a subframe number of the first uplink subframe.

Optionally, the communication device is a base station, and the mapping relationship is a feedback relationship.

The processor 17 is specifically configured to determine that the current subframe is a first uplink subframe, the subframe 1 is a second downlink subframe in which feedback information corresponding to the first uplink subframe is located, and the second downlink subframe is a downlink subframe in the second time segment.

Optionally, when the communication device is a base station, the processor 17 is further configured to: after the receiver 16 correctly receives the uplink data in the first uplink subframe, determine to skip sending the feedback information to the UE in the second downlink subframe.

Optionally, the processor 17 is further configured to: if the receiver 16 does not correctly receive the uplink data in the first uplink subframe, determine that the transmitter 15 sends scheduling information in a third downlink subframe, where the scheduling information is used to schedule a third uplink subframe, the scheduling information carries a CIF, and the CIF carries a process ID of the uplink data.

Optionally, the communication device is UE or a base station.

This embodiment of the present invention provides a communication device. If the communication device determines that a current subframe belongs to a first time segment, the communication device determines data transmission of the current subframe, where the first time segment is a time segment in which scheduling is allowed on a secondary component carrier, that is, a time segment in which a frequency resource is available. By determining that normal data transmission can be performed in all subframes in the time segment in which a frequency resource is available, the communication device ensures normal communication between a base station and UE, thereby improving communication efficiency between the base station and the UE.

### Embodiment 3

This embodiment of the present invention provides a method for determining data transmission. As shown in FIG. 8, the method may include the following steps.

S101. A communication device determines that a current subframe belongs to a first time segment, where the first time segment is a time segment in which scheduling is allowed on a secondary component carrier.

An Long Term Evolution Advanced(LTE-A) system is a further evolved and enhanced system of a 3rd Generation Partnership Project(3GPP) LTE system. In the LTE-A system, a carrier aggregation (CA) technology is introduced to meet a requirement of the International Telecommunication Union in a peak data rate of the fourth generation communication technology. In the CA technology, frequency spectrums of two or more component carriers (Component Carrier) are aggregated to obtain higher transmission bandwidth. The frequency spectrum of the component carriers may be consecutive frequency spectrums adjacent to each other, or may be frequency spectrums not adjacent to each other in a same band, or may even be inconsecutive frequency spectrums in different bands. LTE-A user equipment may simultaneously access, according to a capability of the user equipment and a service requirement, multiple component carriers to transmit and receive data.

In an existing CA system, carriers in a same base station are aggregated, or carriers in a macro cell and a micro cell that have ideal backhaul are aggregated. For example, a macro cell and a micro cell are connected by using an optical fiber (the micro cell may also be a wireless radio-frequency head). In this way, a base station can obtain all information carried in multiple component carriers in time, and the base station can perform joint scheduling on the multiple component carriers.

It should be noted that, the method for determining data transmission provided in this embodiment of the present invention is a process of performing data transmission between a base station and UE in a secondary component carrier. The method may be applied to a process of performing data transmission in any secondary component carrier, which is not limited in the present invention.

In this embodiment of the present invention, a base station may configure one primary component carrier and at least one secondary component carrier for UE, and perform data transmission by using the primary component carrier and the at least one secondary component carrier. In this embodiment of the present invention, an LTE carrier is deployed in an unlicensed spectrum, and the LTE carrier is used as a secondary component carrier in the method for determining data transmission provided in the present invention. The unlicensed spectrum refers to a public spectrum that is not a dedicated carrier in which a base station can perform data transmission. Therefore, in the present invention, frequency resources used by the base station and the UE to perform data transmission in the secondary component carrier may be inconsecutive. When different base stations transmit data by using one secondary component carrier, these base stations need to contend with each other to obtain a time segment in which the base stations can transmit the data in the secondary component carrier.

It should be noted that, in a time division duplex long term evolution (TDD-LTE) system, one frame includes 10 subframes. In the 10 subframes, some subframes are uplink subframes, some subframes are downlink subframes, or there may be a special subframe, where the special subframe includes both an uplink channel and a downlink channel. In an FDD-LTE (Frequency Division Duplexing Long Term Evolution, frequency-division duplex long term evolution) system, one uplink radio frame includes 10 uplink subframes, and one downlink radio frame includes 10 downlink subframes. In the FDD-LTE system, uplink and downlink are separated and use different frequencies. The base station sends a downlink channel in a downlink subframe or the special subframe so as to transmit data to the UE, and the UE sends an uplink channel in an uplink subframe or the special subframe so as to transmit data to the base station.

In a practical application, in the TDD-LTE system, it is assumed that subframe numbers of 10 subframes in a TDD frame are j, and a value of j is an integer from 0 to 9. When j+1 is greater than 9, a subframe j+1 is numbered (j+1) mod 10; and when j-1 is less than 0, a subframe j-1 is numbered (j-1) mod 10.

It may be understood that, in the TDD-LTE system, subframes in each frame are numbered 0-9, that is, subframe numbers of each frame are 0-9.

Specifically, in the TDD-LTE system, according to different configurations between uplink and downlink, there may be seven uplink-downlink configurations. One subframe has one millisecond, and one frame has 10 milliseconds. If five milliseconds is a period, there are three uplink-downlink configurations, that is, downlink:uplink=2:3, downlink:uplink=3:2, and downlink:uplink=4:1. If 10 milliseconds is a period, there are four uplink-downlink configurations, that is, downlink:uplink=5:5, downlink:uplink=7:3, downlink:uplink=8:2, and downlink:uplink=9:1.

It should be noted that, before determining that the current subframe belongs to the first time segment, where the first time segment is the time segment in which scheduling is allowed on the secondary component carrier, the communication device determines information about the time segment in which scheduling is allowed on the secondary component carrier, where the secondary component carrier is a secondary component carrier used when the communication device performs communication, and the information about the time segment in which scheduling is allowed on the secondary component carrier includes the first time segment in which scheduling is allowed on the secondary component carrier.

The method for determining data transmission provided in this embodiment of the present invention is mainly applied to the TDD-LTE system. The communication device determines the information about the time segment in which scheduling is allowed on the secondary component carrier, where the secondary component carrier is the secondary component carrier used when the communication device performs communication, and the information about the time segment in which scheduling is allowed on the secondary component carrier includes the first time segment in which scheduling is allowed on the secondary component carrier.

Optionally, the communication device in this embodiment of the present invention may be UE or a base station. When the communication device is UE, a base station notifies the UE of at least one of start and end time points at which scheduling is allowed on the secondary component carrier or start and end time points at which scheduling is stopped on the secondary component carrier. The UE may determine, according to the at least one of the start and end time points at which scheduling is allowed on the secondary component carrier or the start and end time points at which scheduling is stopped on the secondary component carrier, the information about the time segment in which scheduling is allowed on the secondary component carrier. The information about the time segment in which scheduling is allowed on the secondary component carrier includes the first time segment in which scheduling is allowed on the secondary component carrier. When the communication device is a base station, the base station may determine by itself the information about the time segment in which scheduling is allowed on the secondary component carrier.

It should be noted that, a method in which the base station notifies the UE of the at least one of the start and end time points at which scheduling is allowed on the secondary component carrier or the start and end time points at which scheduling is stopped on the secondary component carrier may be: the base station sends a notification message to the UE by using the primary component carrier or another secondary component carrier. A sending manner of the notification message is notifying by using a PDCCH or a Media Access Control MAC (Media Access Control, Media Access Control) layer.

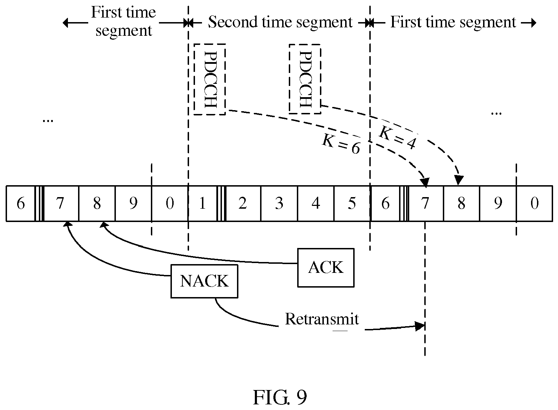

Exemplarily, the base station may send the notification message to the UE by using the PDCCH, and the notification message carries the start and end time points at which scheduling is stopped on the secondary component carrier. As shown in FIG. 9, in a time segment in which no frequency resource is available, a subframe numbered 1 is a start time point at which scheduling is stopped on the secondary component carrier and a subframe numbered 5 is an end time point at which scheduling is stopped on the secondary component carrier. A time segment from the subframe numbered 1 to the subframe numbered 5 is a second time segment. The second time segment is a time segment in which scheduling cannot be performed. In a time segment that is in a frequency spectrum in which the secondary component carrier is located, a time segment except the second time segment is the first time segment, that is, a time segment except the time segment in which no frequency resource is available is a time segment in which a frequency resource is available.

Specifically, after determining the first time segment in which scheduling is allowed on the secondary component carrier, the communication device may determine that the current subframe belongs to the first time segment.

It may be understood that, the first time segment is the time segment in which a frequency resource is available, and the communication device can perform data transmission only in the time segment in which a frequency resource is available.

Exemplarily, as shown in FIG. 1, the first time segment is the time segment in which a frequency resource is available.

S102. The communication device determines data transmission of the current subframe.

After determining that the current subframe belongs to the first time segment, the communication device determines the data transmission of the current subframe.

It should be noted that, generally, uplink data may be transmitted in an uplink subframe, and downlink data may be transmitted in a downlink subframe.

It may be understood that, in the method for determining data transmission provided in this embodiment of the present invention, the communication device determines that normal data transmission can be performed in each current subframe that belongs to the first time segment, so that a frequency resource may be fully used to perform data transmission in a subframe that belongs to the first time segment. Specifically, a later part of this embodiment describes in detail a method in which the communication device determines the data transmission of the current subframe.

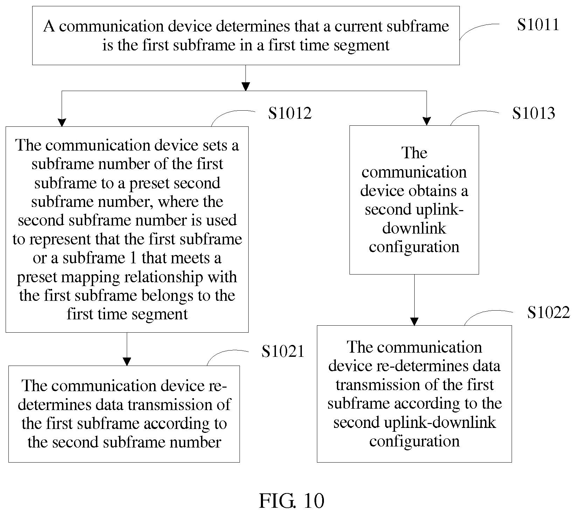

Specifically, as shown in FIG. 10, S101 specifically includes S1011-S1013, and S102 specifically includes S1021-S1022, which are as follows.

S1011. The communication device determines that the current subframe is the first subframe in the first time segment.

The communication device determines that the current subframe is the first subframe in the first time segment.

Specifically, according to the information about the time segment in which scheduling is allowed on the secondary component carrier, the communication device determines that the current subframe is the first subframe in the first time segment.

Exemplarily, if the first time segment is the time segment from the subframe numbered 1 to the subframe numbered 5, the subframe numbered 1 is the first subframe in the first time segment.

S1012. The communication device sets a subframe number of the first subframe to a preset second subframe number, where the second subframe number is used to represent that the first subframe or a subframe 1 that meets a preset mapping relationship with the first subframe belongs to the first time segment.

After determining that the current subframe is the first subframe in the first time segment, the communication device sets the subframe number of the first subframe to the preset second subframe number. The second subframe number is used to represent that the first subframe or the subframe 1 that meets the preset mapping relationship with the first subframe belongs to the first time segment.

It should be noted that, the second subframe number in this embodiment of the present invention may be a subframe number pre-defined in the communication device, or may be a subframe number obtained by the communication device when a subframe number is set. A specific setting manner is not limited in the present invention.

For example, after determining that the current subframe is a subframe numbered 8, that is, after determining that the current subframe is the first subframe in the first time segment, the communication device sets a subframe number of the current subframe to a subframe numbered 2.

It may be understood that, the second subframe number is set in order that each subframe from the first subframe in the first time segment can be used, so that a frequency resource is properly used. Therefore, the second subframe number is used to represent that the first subframe or the subframe 1 that meets the preset mapping relationship with the first subframe belongs to the first time segment. After the subframe number of the first subframe in the first time segment is set to the second subframe number, a subframe number of a subframe after the first subframe is accordingly changed, which is implemented by subframe numbering software.

S1013. The communication device obtains a second uplink-downlink configuration.

The communication device obtains the second uplink-downlink configuration after determining that the current subframe is the first subframe in the first time segment.

Optionally, the second uplink-downlink configuration in this embodiment of the present invention may be an uplink-downlink configuration pre-defined in the communication device, or may be an uplink-downlink configuration obtained by the communication device. A specific setting manner is not limited in the present invention.

Further, when the communication device is the base station, the base station learns the preset or pre-configured second uplink-downlink configuration. When the communication device is the UE, the base station sends the notification message to the UE so as to notify the UE of the second uplink-downlink configuration. The sending manner of the notification message is notifying by using the PDCCH or the Media Access Control MAC layer.

It should be noted that, S1012 and S1013 are two optional steps after S1011, that is, after S1011, S1012 may be executed, or S1013 may be executed.

S1021. The communication device determines data transmission of the first subframe according to the second subframe number.

After setting the subframe number of the first subframe to the second subframe number, the communication device determines the data transmission of the first subframe according to the second subframe number.

It should be noted that, the second subframe number is used to identify information about the data transmission of the current subframe. The second subframe number is preset. The information about the data transmission is used to represent a direction of the data transmission. The communication device may determine the data transmission of the current subframe according to the information about the data transmission identified by the second subframe number.

Exemplarily, if the second subframe number of the first subframe in the first time segment is 0, and a subframe numbered 0 is a downlink subframe, the communication device determines to transmit downlink data in the first subframe.

S1022. The communication device determines data transmission of the first subframe according to the second uplink-downlink configuration.

After obtaining the second uplink-downlink configuration, the communication device determines the data transmission of the first subframe according to the second uplink-downlink configuration.

It should be noted that, a subframe number and a type of data transmitted in a subframe can be learned according to the second uplink-downlink configuration. Therefore, the communication device may determine the data transmission of the current subframe according to a new second uplink-downlink configuration.

It should be noted that, S1021 is a step after S1012, and S1022 is a step after S1013.

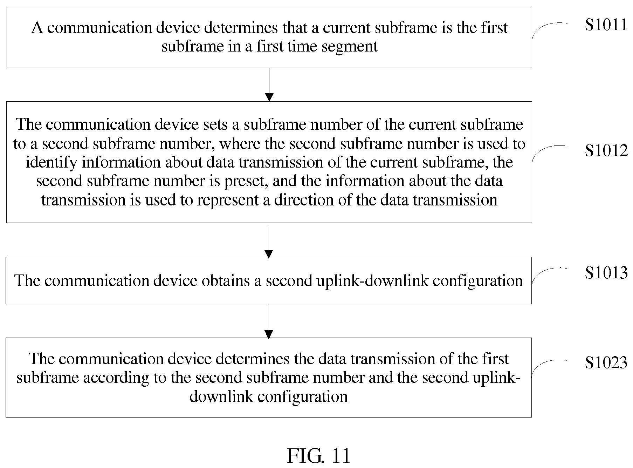

Further, as shown in FIG. 11, an execution order between S1012 and S1013 is not limited in this embodiment of the present invention. That is, in this embodiment of the present invention, S1012 may be executed before S1013, S1013 may be executed before S1012, or S1012 and S1013 may be executed simultaneously.

Optionally, as shown in FIG. 11, S1021 and S1022 may be specifically S1023.

S1023. The communication device determines the data transmission of the first subframe according to the second subframe number and the second uplink-downlink configuration.

The communication device sets the subframe number of the current subframe to the second subframe number, and after obtaining the second uplink-downlink configuration, the communication device determines the data transmission of the first subframe according to the second subframe number and the second uplink-downlink configuration.

It may be understood that, there are seven uplink-downlink configurations in the TDD-LTE system. When different configuration relationships are used in a process in which the communication device transmits data, the communication device may not be able to perform data transmission in the current subframe only by changing the subframe number of the current subframe or changing a current uplink-downlink configuration. In this case, the communication device may change both the subframe number of the current subframe and the current uplink-downlink configuration, so that data transmission can definitely be performed in the current subframe, thereby achieving proper use of a frequency resource.

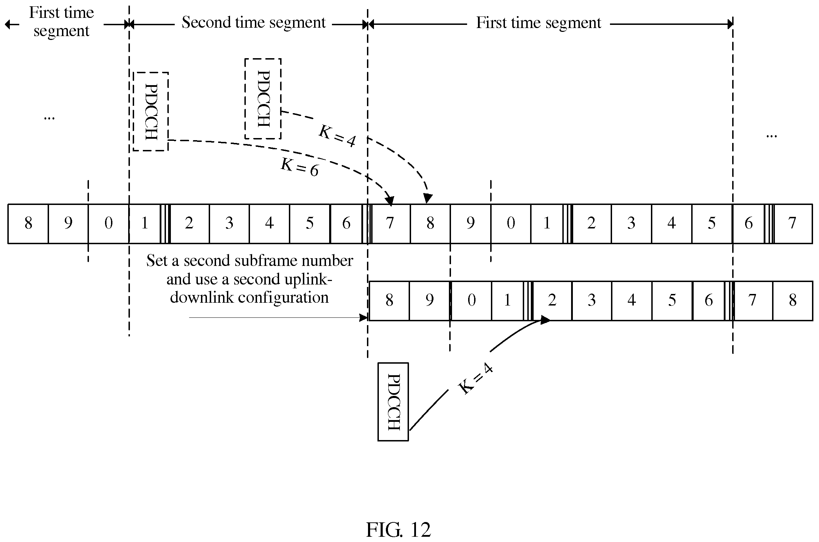

For example, as shown in FIG. 12, in the first time segment in which a frequency resource is available, that an uplink-downlink configuration supported by a current secondary component carrier is downlink:uplink=3:2 is used as an example. It is assumed that the communication device determines that the current subframe is the first subframe in the first time segment, that is, the first subframe numbered 7. The first subframe numbered 7 is an uplink subframe. A subframe numbered 4 in which the first subframe numbered 7 is scheduled is in the second time segment in which no frequency resource is available, and therefore uplink data transmission cannot be performed in the first subframe numbered 7. The communication device sets a subframe number of the first subframe numbered 7 to 8 and sets the current uplink-downlink configuration to 4:1, so that the communication device can schedule a subframe numbered 2 in the subframe numbered 8, that is, the communication device determines to transmit downlink data in the current subframe: the subframe numbered 8.

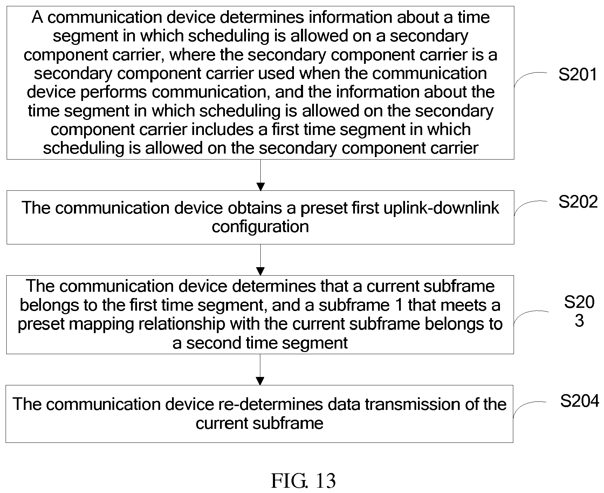

Further, as shown in FIG. 13, this embodiment of the present invention further provides a method for determining data transmission, and the method includes S201-S204.

S201. A communication device determines information about a time segment in which scheduling is allowed on a secondary component carrier, where the secondary component carrier is a secondary component carrier used when the communication device performs communication, and the information about the time segment in which scheduling is allowed on the secondary component carrier includes a first time segment in which scheduling is allowed on the secondary component carrier.

Specifically, for a process in which the communication device determines the information about the time segment in which scheduling is allowed on the secondary component carrier and related description, reference may be made to the related description of S101 in this embodiment of the present invention. Details are not described herein again.

S202. The communication device obtains a preset first uplink-downlink configuration.

In a process in which the communication device performs data transmission, the communication device determines data transmission of each subframe according to the preset first uplink-downlink configuration.

Specifically, when the communication device is a base station, the first uplink-downlink configuration is learned by the base station; when the communication device is UE, the first uplink-downlink configuration is notified to the UE by a base station.

It may be understood that, the first uplink-downlink configuration in this embodiment of the present invention is a preset uplink-downlink configuration used when communication is performed between the base station and the UE.

It should be noted that, an execution order between S201 and S202 is not limited in this embodiment of the present invention. That is, S201 may be executed before S202, or S202 may be executed before S201.

S203. The communication device determines that a current subframe belongs to the first time segment, and a subframe 1 that meets a preset mapping relationship with the current subframe belongs to a second time segment.

After determining the information about the time segment in which scheduling is allowed on the secondary component carrier, the communication device determines that the current subframe belongs to the first time segment, and the subframe 1 that meets the preset mapping relationship with the current subframe belongs to the second time segment.

Optionally, the preset mapping relationship in this embodiment of the present invention may be a scheduling relationship or a feedback relationship.

It should be noted that, some time is needed to transmit a wireless signal from the base station to the UE, the UE further needs some time to prepare for uplink data transmission, and sending of the uplink data transmission needs to be earlier than expected receiving by the base station. Therefore, in 3GPP LTE, information about scheduling for transmission of the coming uplink data needs to be sent at the latest in a subframe that is four subframes before an expected subframe in which the transmission arrives at the base station. That is, when the communication device transmits the uplink data in an uplink subframe, the communication device can transmit the uplink data in the uplink subframe only after the communication device sends the scheduling information in advance in a downlink subframe in which the uplink subframe is scheduled.

For example, the base station needs to transmit the uplink data in an uplink subframe numbered 7, and the corresponding scheduling information is sent from the base station in a downlink subframe numbered 3. If a subframe numbered 3 is an uplink subframe, the corresponding scheduling information needs to be sent in advance. In a downlink subframe, the base station needs to notify downlink data transmission in the same downlink subframe and the uplink data transmission performed in the uplink subframe. That is, there are at least one to three OFDM symbols between the current subframe and the subframe 1 (in some limited cases, there may be four orthogonal frequency division multiplexing(OFDM) symbols). In a case of a normal cyclic prefix, each downlink subframe includes 14 OFDM symbols, and actual data transmission may be performed in 10 to 13 OFDM symbols of the 14 OFDM symbols.

S204. The communication device determines data transmission of the current subframe.

Specifically, for a process in which the communication device determines the data transmission of the current subframe and related description, reference may be made to the steps and description of S102 in this embodiment of the present invention. Details are not described herein again.

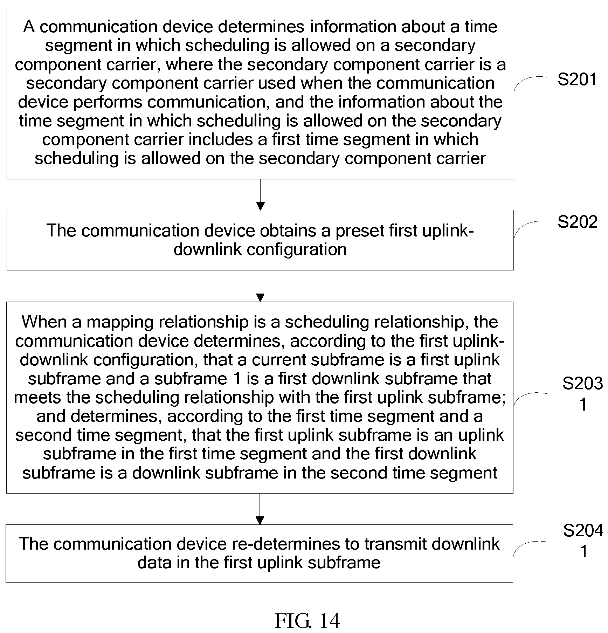

Specifically, as shown in FIG. 14, S203 specifically includes S2031, and S204 specifically includes S2041, which are as follows.

S2031. When the mapping relationship is a scheduling relationship, the communication device determines, according to the first uplink-downlink configuration, that the current subframe is a first uplink subframe and the subframe 1 is a first downlink subframe that meets the scheduling relationship with the first uplink subframe; and determines, according to the first time segment and the second time segment, that the first uplink subframe is an uplink subframe in the first time segment and the first downlink subframe is a downlink subframe in the second time segment.

When the mapping relationship is the scheduling relationship, after obtaining the first uplink-downlink configuration, the communication device determines, according to the first uplink-downlink configuration, that the current subframe is the first uplink subframe and the subframe 1 is the first downlink subframe that meets the scheduling relationship with the first uplink subframe; and determines, according to the first time segment and the second time segment, that the first uplink subframe is an uplink subframe in the first time segment and the first downlink subframe is a downlink subframe in the second time segment.

Exemplarily, as shown in FIG. 12, that a first uplink-downlink configuration supported by a current secondary component carrier is downlink:uplink=3:2 is used as an example. It is assumed that the first subframe numbered 7 is the current subframe, and the communication device is a base station. The base station determines, according to the first uplink-downlink configuration and the first time segment, that the first subframe numbered 7 is the first uplink subframe in the first time segment, and the base station determines, according to the first uplink-downlink configuration, that the first downlink subframe in which the first subframe numbered 7 is scheduled is a subframe numbered 1 before the first subframe numbered 7. The base station determines, according to the second time segment, that the subframe numbered 1 belongs to the second time segment.

It should be noted that, S2041 is executed after S2031.

S2041. The communication device determines to transmit downlink data in the first uplink subframe.

When the mapping relationship is the scheduling relationship, the communication device determines to transmit the downlink data in the first uplink subframe, after the communication device determines, according to the first uplink-downlink configuration, that the current subframe is the first uplink subframe and the subframe 1 is the first downlink subframe that meets the scheduling relationship with the first uplink subframe, and determines, according to the first time segment and the second time segment, that the first uplink subframe is an uplink subframe in the first time segment and the first downlink subframe is a downlink subframe in the second time segment.

It may be understood that, the first downlink subframe in which the first uplink subframe is scheduled belongs to the second time segment, and the second time segment is a time segment in which no frequency resource is available, and therefore the communication device cannot schedule the first uplink subframe in the first downlink subframe. As a result, the uplink data cannot be transmitted in the first uplink subframe. Therefore, in the method for determining data transmission proposed in this embodiment of the present invention, transmitting the downlink data in the first uplink subframe in the foregoing case is determined, so that a waste of a frequency resource in the first uplink subframe is avoided.

It should be noted that, the communication device in the foregoing embodiment may be a base station or UE.

It may be understood that, the base station interacts with the UE in a process of performing data transmission between the base station and the UE. Therefore, if the base station intends to send downlink data to the UE in a subframe, the UE needs to learn that the downlink data sent by the base station needs to be received in the subframe. Likewise, if the UE intends to send uplink data to the base station in a subframe, the base station needs to learn that the uplink data sent by the UE needs to be received in the subframe.

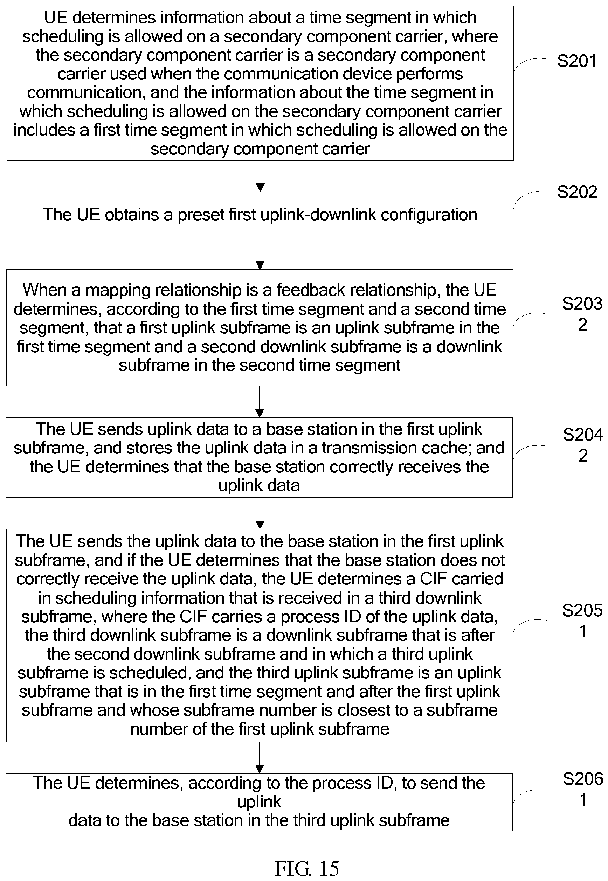

Further, as shown in FIG. 15, when the communication device is UE, the foregoing S203 specifically includes S2032, S204 specifically includes S2042, and after S2042, the method for determining data transmission provided in this embodiment of the present invention further includes S2051-S2061, which are specifically as follows.

S2032. When the mapping relationship is a feedback relationship, the UE determines, according to the first time segment and the second time segment, that a first uplink subframe is an uplink subframe in the first time segment and the second downlink subframe is a downlink subframe in the second time segment.

When the mapping relationship is the feedback relationship, after the communication device determines the information about the time segment in which scheduling is allowed on the secondary component carrier, the UE determines, according to the first uplink-downlink configuration, that the current subframe is the first uplink subframe and the subframe 1 is the second downlink subframe that meets the feedback relationship with the first uplink subframe; and determines, according to the first time segment and the second time segment, that the first uplink subframe is an uplink subframe in the first time segment and the second downlink subframe is a downlink subframe in the second time segment.

It should be noted that, in the process in which the communication device transmits data, after transmitting the uplink data in the first uplink subframe, the communication device needs to receive, in the second downlink subframe after the first uplink subframe, feedback information about whether the uplink data is normally transmitted, where the second downlink subframe is a subframe that meets the feedback relationship with the first uplink subframe.

Exemplarily, as shown in FIG. 9, that the first uplink-downlink configuration supported by the current secondary component carrier is downlink:uplink=3:2 is used as an example. It is assumed that the first subframe numbered 7 is the current subframe, and the communication device is a base station. The base station determines, according to the first uplink-downlink configuration and the first time segment, that the first subframe numbered 7 is the first uplink subframe in the first time segment, and the base station determines, according to the first uplink-downlink configuration, that the second downlink subframe in which the first subframe numbered 7 is fed back is the first subframe numbered 1 after the first subframe numbered 7. The base station determines, according to the second time segment, that the first subframe numbered 1 belongs to the second time segment.

It should be noted that, S2042 is executed after S2032.

S2042. The UE sends uplink data to a base station in the first uplink subframe, and stores the uplink data in a transmission cache; and the UE determines that the base station correctly receives the uplink data.

When the mapping relationship is the feedback relationship, after the UE determines, according to the first time segment and the second time segment, that the first uplink subframe is an uplink subframe in the first time segment and the second downlink subframe is a downlink subframe in the second time segment, the UE sends the uplink data to the base station in the first uplink subframe, and stores the uplink data in the transmission cache; and the UE determines that the base station correctly receives the uplink data.

It should be noted that, the communication device determines that the current subframe is the first uplink subframe that belongs to the first time segment, and therefore the UE may send the uplink data to the base station in the first uplink subframe. In this embodiment of the present invention, the UE stores the uplink data in the transmission cache, so that the UE may resend the uplink data stored in the transmission cache to the base station when the base station does not correctly receive the uplink data.

It may be understood that, when the current subframe in which the feedback information is fed back, that is, the second downlink subframe for the first uplink subframe belongs to the second time segment in which no frequency resource is available, the UE stores the uplink data in the transmission cache after transmitting the uplink data to the base station; and the UE determines that the base station correctly receives the uplink data, so that when the UE cannot receive the feedback information sent by the base station by using the second downlink subframe, the UE determines that the uplink data is correctly received by the base station. In this way, the UE does not need to keep waiting for the foregoing feedback information, but performs data transmission of another process, so that a frequency resource is fully used.

S2051. The UE sends the uplink data to the base station in the first uplink subframe, and if the UE determines that the base station does not correctly receive the uplink data, the UE determines a CIF (carrier indicator field) carried in scheduling information that is received in a third downlink subframe, where the CIF carries a process ID of the uplink data, the third downlink subframe is a downlink subframe that is after the second downlink subframe and in which a third uplink subframe is scheduled, and the third uplink subframe is an uplink subframe that is in the first time segment and after the first uplink subframe and whose subframe number is closest to a subframe number of the first uplink subframe.

It should be noted that, the method for determining data transmission proposed in this embodiment of the present invention may be applied to a scenario in which the UE transmits the uplink data. When the UE sends the uplink data to the base station in the first uplink subframe, if the UE determines that the base station does not correctly receive the uplink data, the UE determines the CIF carried in the third downlink subframe that meets a scheduling relationship with the third uplink subframe, and determines, according to the CIF, the process ID for retransmitting the uplink data. The UE retransmits the uplink data in the third uplink subframe.

S2061. The UE determines, according to the process ID, to send the uplink data to the base station in the third uplink subframe.

The UE determines, according to the process ID, to send the uplink data to the base station in the third uplink subframe, after the UE sends the uplink data to the base station in the first uplink subframe, and if the UE determines that the base station does not correctly receive the uplink data, the UE determines the CIF carried in the third downlink subframe that meets the scheduling relationship with the third uplink subframe, and determines, according to the CIF, the process ID for scheduling the uplink data.

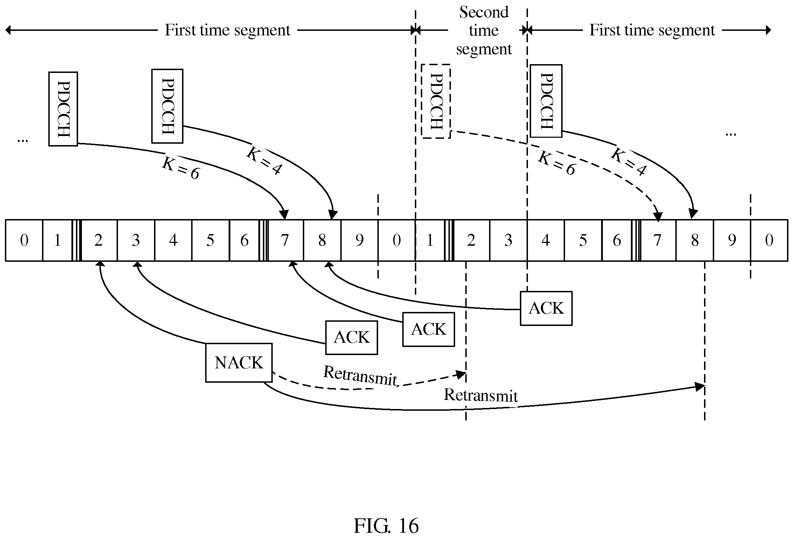

Exemplarily, as shown in FIG. 16, that the first uplink-downlink configuration supported by the current secondary component carrier is downlink:uplink=3:2 is used as an example. The UE sends the uplink data to the base station in the first subframe numbered 2, but the base station does not correctly receive the uplink data. Therefore, the UE needs to retransmit the uplink data in the second subframe numbered 2. It can be learned from FIG. 16 that, the second subframe numbered 2 belongs to the second time segment. Therefore, the UE cannot retransmit the uplink data in the second subframe numbered 2, which causes a delay of retransmitting the uplink data by the UE and affects communication efficiency. In this case, the method for determining data transmission provided in this embodiment of the present invention is used. It is assumed that the current subframe is the first schedulable uplink subframe that is after the second subframe numbered 2 and that belongs to the first time segment, that is, the third uplink subframe: a subframe numbered 8. The UE determines the CIF carried in the third downlink subframe that meets the scheduling relationship with the subframe numbered 8, that is, a subframe numbered 4, and determines the process ID of the uplink data according to the CIF. The UE may retransmit the uplink data according to the process ID in the uplink subframe numbered 8.

It may be understood that, when the base station does not correctly receive the uplink data sent by the UE, and the uplink data needs to be retransmitted, a schedulable uplink subframe that is closest to the subframe in which the uplink data is sent may be determined to retransmit the uplink data, thereby improving efficiency of data retransmission.

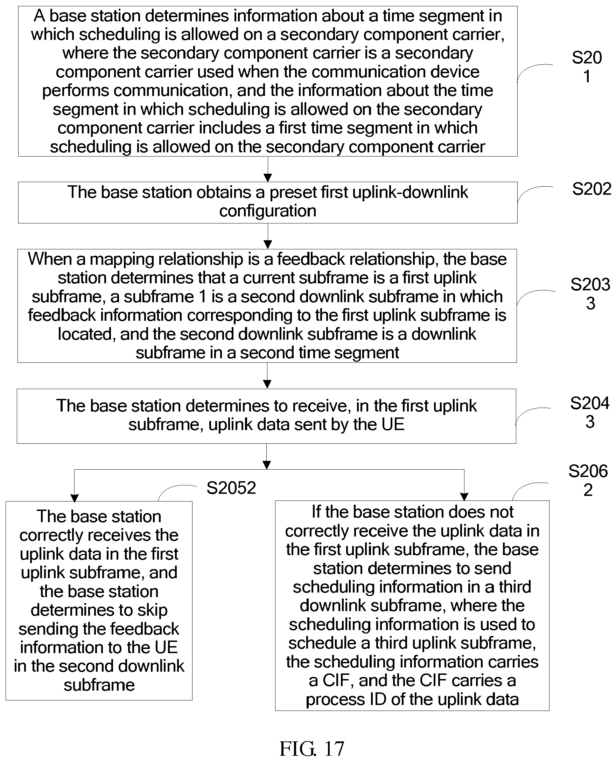

Further, as shown in FIG. 17, when the communication device is a base station, the foregoing S203 specifically includes S2033, S204 specifically includes S2043, and after S2043, the method for determining data transmission provided in this embodiment of the present invention further includes S2052-S2062, which are specifically as follows.

S2033. When the mapping relationship is a feedback relationship, the base station determines that the current subframe is a first uplink subframe, the subframe 1 is a second downlink subframe in which feedback information corresponding to the first uplink subframe is located, and the second downlink subframe is a downlink subframe in the second time segment.

When the mapping relationship is the feedback relationship, after the communication device obtains the first uplink-downlink configuration, the base station determines that the current subframe is the first uplink subframe, the subframe 1 is the second downlink subframe in which the feedback information corresponding to the first uplink subframe is located, and the second downlink subframe is a downlink subframe in the second time segment.

It should be noted that, in a process in which the base station transmits data, after receiving the uplink data in the first uplink subframe, the base station needs to send, in the second downlink subframe after the first uplink subframe, feedback information about whether the uplink data is normally transmitted, where the second downlink subframe is a subframe that meets the feedback relationship with the first uplink subframe.

Exemplarily, as shown in FIG. 9, that the first uplink-downlink configuration supported by the current secondary component carrier is downlink:uplink=3:2 is used as an example. It is assumed that the first subframe numbered 7 is the current subframe. The base station determines, according to the first uplink-downlink configuration and the first time segment, that the first subframe numbered 7 is the first uplink subframe in the first time segment, and the base station determines, according to the first uplink-downlink configuration, that the second downlink subframe in which the first subframe numbered 7 is fed back is the first subframe numbered 1 after the first subframe numbered 7. The base station determines, according to the second time segment, that the first subframe numbered 1 belongs to the second time segment.

It should be noted that, S2043 is executed after S2033.

S2043. The base station determines to receive, in the first uplink subframe, the uplink data sent by the UE.

When the mapping relationship is the feedback relationship, the base station determines to receive, in the first uplink subframe, the uplink data sent by the UE, after the base station determines that the current subframe is the first uplink subframe, the subframe 1 is the second downlink subframe in which the feedback information corresponding to the first uplink subframe is located, and the second downlink subframe is a downlink subframe in the second time segment.

It should be noted that, the base station may determine, according to the first uplink-downlink configuration, to receive, in the first uplink subframe, the uplink data sent by the UE.

S2052. The base station correctly receives the uplink data in the first uplink subframe, and the base station determines to skip sending the feedback information to the UE in the second downlink subframe.

After the base station determines to receive, in the first uplink subframe, the uplink data sent by the UE, if the base station correctly receives the uplink data in the first uplink subframe, the base station determines to skip sending the feedback information to the UE in the second downlink subframe, so as to end transmission of the uplink data.

It may be understood that, if the base station correctly receives the uplink data in the subframe 1, the UE does not need to retransmit the uplink data in an uplink subframe that has the same subframe number with the subframe 1 and is closest to the subframe 1, and therefore the base station may directly end the transmission of the uplink data.

S2062. If the base station does not correctly receive the uplink data in the first uplink subframe, the base station determines to send scheduling information in a third downlink subframe, where the scheduling information is used to schedule a third uplink subframe, the scheduling information carries a CIF, and the CIF carries a process ID of the uplink data.

After the base station determines to receive, in the first uplink subframe, the uplink data sent by the UE, if the base station does not correctly receive the uplink data in the first uplink subframe, the base station determines to send the scheduling information in the third downlink subframe, where the scheduling information is used to schedule the third uplink subframe, the scheduling information carries the process ID of the uplink data and a subframe number of the third uplink subframe, the third downlink subframe is a downlink subframe that is after the second downlink subframe and in which the third uplink subframe is scheduled, and the third uplink subframe is an uplink subframe that is in the first time segment and after the first uplink subframe and whose subframe number is closest to the subframe number of the first uplink subframe.

It should be noted that, after the base station does not correctly receive the uplink data in the first uplink subframe, the base station may determine to retransmit the uplink data in the third uplink subframe.

It should be noted that, S2052 and S2062 are two parallel steps after S2043. In this embodiment of the present invention, either S2043-S2052 or S2043-S2062 may be executed, which specifically depends on an execution condition.

This embodiment of the present invention provides a method for determining data transmission. If the communication device determines that a current subframe belongs to a first time segment, the communication device determines data transmission of the current subframe, where the first time segment is a time segment in which scheduling is allowed on a secondary component carrier, that is, a time segment in which a frequency resource is available. By determining that normal data transmission can be performed in all subframes in the time segment in which a frequency resource is available, the communication device ensures normal communication between a base station and UE, thereby improving communication efficiency between the base station and the UE.

It may be clearly understood by a person skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Therefore, the protection scope of the present invention shall be subject to the protection scope of the claims.

## Claims

1. A communication device, comprising:
an obtaining unit (11) configured to obtain a preset first uplink-downlink configuration;
a determining unit (10) configured to: determine, according to the first uplink-downlink configuration obtained by the obtaining unit, that a current subframe is a first uplink subframe and a subframe 1 is a first downlink subframe that meets a scheduling relationship with the first uplink subframe, wherein the current subframe belongs to a first time segment in which scheduling is allowed on a secondary component carrier and the subframe 1 belongs to a second time segment in which scheduling is stopped on the secondary component carrier; determine, according to the first time segment and the second time segment that are obtained by the obtaining unit, that the first uplink subframe is an uplink subframe in the first time segment and the first downlink subframe is a downlink subframe in the second time segment; and determine to transmit downlink data in the first uplink subframe.

2. The communication device according to claim 1, wherein the communication unit further comprises a setting unit, wherein:
the determining unit (10) is specifically configured to determine that the current subframe is the first subframe in the first time segment;
the setting unit is configured to set a subframe number of the first subframe determined by the determining unit to a preset second subframe number, wherein the second subframe number is used to represent that the first subframe or a subframe 1 that meets a preset mapping relationship with the first subframe belongs to the first time segment; and
the determining unit (10) is specifically configured to determine data transmission of the first subframe according to the second subframe number set by the setting unit.

3. The communication device according to claim 2, wherein the communication device further comprises an obtaining unit, wherein:
the obtaining unit (11) is configured to obtain a second uplink-downlink configuration before the determining unit determines the data transmission of the current subframe; and
the determining unit is specifically configured to determine the data transmission of the first subframe according to the second subframe number set by the setting unit and the second uplink-downlink configuration obtained by the obtaining unit.

4. The communication device according to claim 1, wherein the communication device further comprises an obtaining unit, wherein:
the obtaining unit (11) is configured to obtain a second uplink-downlink configuration before the determining unit determines the data transmission of the current subframe; and
the determining unit (10) is specifically configured to: determine that the current subframe is the first subframe in the first time segment, and determine data transmission of the first subframe according to the second uplink-downlink configuration obtained by the obtaining unit.

5. The communication device according to any one of claims 1 to 4, wherein:
the communication device is a user equipment or a base station.

6. A method for determining data transmission, comprising:
obtaining, by a communication device, a preset first uplink-downlink configuration;
determining (S201), by the communication device according to the first uplink-downlink configuration, that the current subframe is a first uplink subframe which belongs to a first time segment in which scheduling is allowed on a secondary component carrier and a subframe 1 is a first downlink subframe which belongs to a second time segment in which scheduling is stopped on the secondary component carrier; and determining, according to the first time segment and the second time segment, that the first uplink subframe is an uplink subframe in the first time segment and the first downlink subframe is a downlink subframe in the second time segment; and
determining (S204), by the communication device, to transmit downlink data in the first uplink subframe.

7. The method for determining data transmission according to claim 6, wherein the determining (S201), by a communication device, that a current subframe belongs to a first time segment comprises:
determining, by the communication device, that the current subframe is the first subframe in the first time segment; and
correspondingly, the determining, by the communication device, data transmission of the current subframe comprises:
setting, by the communication device, a subframe number of the first subframe to a preset second subframe number, wherein the second subframe number is used to represent that the first subframe or a subframe 1 that meets a preset mapping relationship with the first subframe belongs to the first time segment; and
determining, by the communication device, data transmission of the first subframe according to the second subframe number.

8. The method for determining data transmission according to claim 7, wherein before the determining, by the communication device, data transmission of the current subframe, the method further comprises:
obtaining, by the communication device, a second uplink-downlink configuration; wherein
the determining, by the communication device, data transmission of the current subframe comprises:
determining, by the communication device, the data transmission of the first subframe according to the second subframe number and the second uplink-downlink configuration.

9. The method for determining data transmission according to claim 6, wherein before the determining, by the communication device, data transmission of the current subframe, the method further comprises:
obtaining, by the communication device, a second uplink-downlink configuration; wherein
the determining, by a communication device, that a current subframe belongs to a first time segment comprises:
determining, by the communication device, that the current subframe is the first subframe in the first time segment; and
correspondingly, the determining, by the communication device, data transmission of the current subframe comprises:
determining, by the communication device, data transmission of the first subframe according to the second uplink-downlink configuration.

10. The method for determining data transmission according to any one of claims 6 to 9, wherein:
the communication device is a user equipment or a base station.

## Patentansprüche

1. Kommunikationsvorrichtung, umfassend:
eine Erlangungseinheit (11), konfiguriert zum Erlangen einer im Voraus eingestellten ersten Aufwärtsstrecken-Abwärtsstrecken-Konfiguration;
eine Bestimmungseinheit (10), konfiguriert zum: Bestimmen, gemäß der durch die Erlangungseinheit erlangten ersten Aufwärtsstrecken-Abwärtsstrecken-Konfiguration, dass ein gegenwärtiger Teilrahmen ein erster Aufwärts strecken-Teilrahmen ist und ein Teilrahmen 1 ein erster Abwärts strecken-Teilrahmen ist, der einer Terminierungsbeziehung mit dem ersten Aufwärtsstrecken-Teilrahmen entspricht, wobei der gegenwärtige Teilrahmen zu einem ersten Zeitsegment gehört, in dem Terminierung auf einem sekundären Komponententräger gestattet ist, und der Teilrahmen 1 zu einem zweiten Zeitsegment gehört, in dem Terminierung auf dem sekundären Komponententräger gestoppt ist; Bestimmen, gemäß dem ersten Zeitsegment und dem zweiten Zeitsegment, die durch die Erlangungseinheit erlangt werden, dass der erste Aufwärtsstrecken-Teilrahmen ein Aufwärts strecken-Teilrahmen in dem ersten Segment ist und der erste Abwärtsstrecken-Teilrahmen ein Abwärts strecken-Teilrahmen in dem zweiten Zeitsegment ist; und Bestimmen, Abwärtsstreckendaten in dem ersten Aufwärtsstrecken-Teilrahmen zu übertragen.

2. Kommunikationsvorrichtung nach Anspruch 1, wobei die Kommunikationseinheit ferner eine Einstellungseinheit umfasst, wobei:
die Bestimmungseinheit (10) spezifisch konfiguriert ist zum Bestimmen, dass der gegenwärtige Teilrahmen der erste Teilrahmen in dem ersten Zeitsegment ist;
die Einstellungseinheit konfiguriert ist zum Einstellen einer Teilrahmennummer des durch die Bestimmungseinheit bestimmten ersten Teilrahmens auf eine im Voraus eingestellte zweite Teilrahmennummer, wobei die zweite Teilrahmennummer verwendet wird, zu repräsentieren, dass der erste Teilrahmen oder ein Teilrahmen 1, der einer im Voraus eingestellten Abbildungsbeziehung mit dem ersten Teilrahmen entspricht, zu dem ersten Zeitsegment gehört; und
die Bestimmungseinheit (10) spezifisch konfiguriert ist zum Bestimmen von Datenübertragung des ersten Teilrahmens gemäß der durch die Einstellungseinheit eingestellten zweiten Teilrahmennummer.

3. Kommunikationsvorrichtung nach Anspruch 2, wobei die Kommunikationsvorrichtung ferner eine Erlangungseinheit umfasst, wobei:
die Erlangungseinheit (11) konfiguriert ist zum Erlangen einer zweiten Aufwärtsstrecken-Abwärtsstrecken-Konfiguration, bevor die Bestimmungseinheit die Datenübertragung des gegenwärtigen Teilrahmens bestimmt; und
die Bestimmungseinheit spezifisch konfiguriert ist zum Bestimmen der Datenübertragung des ersten Teilrahmens gemäß der durch die Einstellungseinheit eingestellten zweiten Teilrahmennummer und der durch die Erlangungseinheit erlangten zweiten Aufwärtsstrecken-Abwärtsstrecken-Konfiguration.

4. Kommunikationsvorrichtung nach Anspruch 1, wobei die Kommunikationsvorrichtung ferner eine Erlangungseinheit umfasst, wobei:
die Erlangungseinheit (11) konfiguriert ist zum Erlangen einer zweiten Aufwärtsstrecken-Abwärtsstrecken-Konfiguration, bevor die Bestimmungseinheit die Datenübertragung des gegenwärtigen Teilrahmens bestimmt; und
die Bestimmungseinheit (10) spezifisch konfiguriert ist zum: Bestimmen, dass der gegenwärtige Teilrahmen der erste Teilrahmen in dem ersten Zeitsegment ist, und Bestimmen von Datenübertragung des ersten Teilrahmens gemäß der durch die Erlangungseinheit erlangten zweiten Aufwärtsstrecken-Abwärtsstrecken-Konfiguration.

5. Kommunikationsvorrichtung nach einem der Ansprüche 1 bis 4, wobei:
die Kommunikationsvorrichtung eine Benutzerausrüstung oder eine Basisstation ist.

6. Verfahren zum Bestimmen von Datenübertragung, umfassend:
Erlangen, durch eine Kommunikationsvorrichtung, einer im Voraus eingestellten ersten Aufwärtsstrecken-Abwärtsstrecken-Konfiguration;
Bestimmen (S201), durch die Kommunikationsvorrichtung gemäß der ersten Aufwärtsstrecken-Abwärtsstrecken-Konfiguration, dass der gegenwärtige Teilrahmen ein erster Aufwärtsstrecken-Teilrahmen ist, der zu einem ersten Zeitsegment gehört, in dem Terminierung auf einem sekundären Komponententräger gestattet ist, und ein Teilrahmen 1 ein erster Abwärts strecken-Teilrahmen ist, der zu einem zweiten Zeitsegment gehört, in dem Terminierung auf dem sekundären Komponententräger gestoppt ist; und Bestimmen, gemäß dem ersten Zeitsegment und dem zweiten Zeitsegment, dass der erste Aufwärtsstrecken-Teilrahmen ein Aufwärtsstrecken-Teilrahmen in dem ersten Segment ist und der erste Abwärtsstrecken-Teilrahmen ein Abwärtsstrecken-Teilrahmen in dem zweiten Zeitsegment ist; und
Bestimmen (S204), durch die Kommunikationsvorrichtung, Abwärtsstreckendaten in dem ersten Aufwärts strecken-Teilrahmen zu übertragen.

7. Verfahren zum Bestimmen von Datenübertragung nach Anspruch 6, wobei das Bestimmen (S201), durch eine Kommunikationsvorrichtung, dass ein gegenwärtiger Teilrahmen zu einem ersten Zeitsegment gehört, umfasst:
Bestimmen, durch die Kommunikationsvorrichtung, dass der gegenwärtige Teilrahmen der erste Teilrahmen in dem ersten Zeitsegment ist; und
korrespondierend das Bestimmen, durch die Kommunikationsvorrichtung, von Datenübertragung des gegenwärtigen Teilrahmens umfasst:
Einstellen, durch die Kommunikationsvorrichtung, einer Teilrahmennummer des ersten Teilrahmens auf eine im Voraus eingestellte zweite Teilrahmennummer, wobei die zweite Teilrahmennummer verwendet wird, zu repräsentieren, dass der erste Teilrahmen oder ein Teilrahmen 1, der einer im Voraus eingestellten Abbildungsbeziehung mit dem ersten Teilrahmen entspricht, zu dem ersten Zeitsegment gehört; und
Bestimmen, durch die Kommunikationsvorrichtung, von Datenübertragung des ersten Teilrahmens gemäß der zweiten Teilrahmennummer.

8. Verfahren zum Bestimmen von Datenübertragung nach Anspruch 7, wobei das Verfahren vor dem Bestimmen, durch die Kommunikationsvorrichtung, von Datenübertragung des gegenwärtigen Teilrahmens ferner umfasst:
Erlangen, durch die Kommunikationsvorrichtung, einer zweiten Aufwärtsstrecken-Abwärts strecken- Konfiguration; wobei
das Bestimmen, durch die Kommunikationsvorrichtung, von Datenübertragung des gegenwärtigen Teilrahmens umfasst:
Bestimmen, durch die Kommunikationsvorrichtung, der Datenübertragung des ersten Teilrahmens gemäß der zweiten Teilrahmennummer und der zweiten Aufwärtsstrecken-Abwärtsstrecken-Konfiguration.

9. Verfahren zum Bestimmen von Datenübertragung nach Anspruch 6, wobei das Verfahren vor dem Bestimmen, durch die Kommunikationsvorrichtung, von Datenübertragung des gegenwärtigen Teilrahmens ferner umfasst:
Erlangen, durch die Kommunikationsvorrichtung, einer zweiten Aufwärtsstrecken-Abwärts strecken- Konfiguration; wobei
das Bestimmen, durch eine Kommunikationsvorrichtung, dass ein gegenwärtiger Teilrahmen zu einem ersten Zeitsegment gehört, umfasst:
Bestimmen, durch die Kommunikationsvorrichtung, dass der gegenwärtige Teilrahmen der erste Teilrahmen in dem ersten Zeitsegment ist; und
korrespondierend das Bestimmen, durch die Kommunikationsvorrichtung, von Datenübertragung des gegenwärtigen Teilrahmens umfasst:
Bestimmen, durch die Kommunikationsvorrichtung, von Datenübertragung des ersten Teilrahmens gemäß der zweiten Aufwärtsstrecken-Abwärtsstrecken-Konfiguration.

10. Verfahren zum Bestimmen von Datenübertragung nach einem der Ansprüche 6 bis 9, wobei:
die Kommunikationsvorrichtung eine Benutzerausrüstung oder eine Basisstation ist.

## Revendications

1. Dispositif de communication, comprenant :
une unité d'obtention (11), configurée pour obtenir une première configuration de liaison montante/liaison descendante prédéfinie ;
une unité de détermination (10) configurée pour : déterminer, d'après la première configuration de liaison montante/liaison descendante obtenue par l'unité d'obtention, qu'une sous-trame actuelle est une première sous-trame de liaison montante et qu'une sous-trame 1 est une première sous-trame de liaison descendante qui vérifie une relation d'ordonnancement avec la première sous-trame de liaison montante, la sous-trame actuelle appartenant à un premier segment de temps dans lequel l'ordonnancement est autorisé sur une porteuse de composante secondaire et la sous-trame 1 appartenant à un deuxième segment de temps dans lequel l'ordonnancement est arrêté sur la porteuse de composante secondaire ; déterminer, d'après le premier segment de temps et le deuxième segment de temps qui sont obtenus par l'unité d'obtention, que la première sous-trame de liaison montante est une sous-trame de liaison montante du premier segment de temps et que la première sous-trame de liaison descendante est une sous-trame de liaison descendante du deuxième segment de temps ; et décider d'envoyer des données de liaison descendante dans la première sous-trame de liaison montante.

2. Dispositif de communication selon la revendication 1, l'unité de communication comprenant également une unité de paramétrage, et dans lequel dispositif :
l'unité de détermination (10) est spécifiquement configurée pour déterminer que la sous-trame actuelle est la première sous-trame du premier segment de temps ;
l'unité de paramétrage est configurée pour donner à un numéro de sous-trame de la première sous-trame déterminée par l'unité de détermination la valeur d'un deuxième numéro de sous-trame prédéfini, le deuxième numéro de sous-trame servant à indiquer que la première sous-trame ou qu'une sous-trame 1 qui vérifie une relation d'ordonnancement prédéfinie avec la première sous-trame appartient au premier segment de temps ; et
l'unité de détermination (10) est spécifiquement configurée pour déterminer l'émission de données de la première sous-trame d'après le deuxième numéro de sous-trame défini par l'unité de paramétrage.

3. Dispositif de communication selon la revendication 2, le dispositif de communication comprenant également une unité d'obtention, et dans lequel dispositif :
l'unité d'obtention (11) est configurée pour obtenir une deuxième configuration de liaison montante/liaison descendante avant que l'unité de détermination ne détermine l'émission de données de la sous-trame actuelle ; et
l'unité de détermination est spécifiquement configurée pour déterminer l'émission de données de la première sous-trame d'après le deuxième numéro de sous-trame défini par l'unité de paramétrage et la deuxième configuration de liaison montante/liaison descendante obtenue par l'unité d'obtention.

4. Dispositif de communication selon la revendication 1, le dispositif de communication comprenant également une unité d'obtention, et dans lequel dispositif :
l'unité d'obtention (11) est configurée pour obtenir une deuxième configuration de liaison montante/liaison descendante avant que l'unité de détermination ne détermine l'émission de données de la sous-trame actuelle ; et
l'unité de détermination (10) est spécifiquement configurée pour : déterminer que la sous-trame actuelle est la première sous-trame du premier segment de temps, et déterminer l'émission de données de la première sous-trame d'après la deuxième configuration de liaison montante/liaison descendante obtenue par l'unité d'obtention.

5. Dispositif de communication selon l'une quelconque des revendications 1 à 4 :
le dispositif de communication étant un équipement d'utilisateur ou une station de base.

6. Procédé pour déterminer une émission de données, comprenant les étapes consistant à :
obtenir, par un dispositif de communication, une première configuration de liaison montante/liaison descendante prédéfinie ;
déterminer (S201), par le dispositif de communication d'après la première configuration de liaison montante/liaison descendante, que la sous-trame actuelle est une première sous-trame de liaison montante qui appartient à un premier segment de temps dans lequel l'ordonnancement est autorisé sur une porteuse de composante secondaire et une sous-trame 1 est une première sous-trame de liaison descendante qui appartient à un deuxième segment de temps dans lequel l'ordonnancement est arrêté sur la porteuse de composante secondaire ; et déterminer, d'après le premier segment de temps et le deuxième segment de temps, que la première sous-trame de liaison montante est une sous-trame de liaison montante du premier segment de temps et que la première sous-trame de liaison descendante est une sous-trame de liaison descendante du deuxième segment de temps ; et
décider (S204), par le dispositif de communication, d'envoyer des données de liaison descendante dans la première sous-trame de liaison montante.

7. Procédé pour déterminer une émission de données selon la revendication 6, dans lequel l'étape consistant à déterminer (S201), par un dispositif de communication, qu'une sous-trame actuelle appartient à un premier segment de temps consiste à :
déterminer, par le dispositif de communication, que la sous-trame actuelle est la première sous-trame du premier segment de temps ; et
de manière correspondante, l'étape consistant à déterminer, par le dispositif de communication, l'émission de données de la sous-trame actuelle consiste à :
donner, par le dispositif de communication, à un numéro de sous-trame de la première sous-trame la valeur d'un deuxième numéro de sous-trame prédéfini, le deuxième numéro de sous-trame servant à indiquer que la première sous-trame ou qu'une sous-trame 1 qui vérifie une relation d'ordonnancement prédéfinie avec la première sous-trame appartient au premier segment de temps ; et
déterminer, par le dispositif de communication, l'émission de données de la première sous-trame d'après le deuxième numéro de sous-trame.

8. Procédé pour déterminer une émission de données selon la revendication 7, le procédé, avant la détermination, par le dispositif de communication, de l'émission de données de la sous-trame actuelle, comprenant également les étapes consistant à :
obtenir, par le dispositif de communication, une deuxième configuration de liaison montante/liaison descendante ; dans lequel procédé
la détermination, par le dispositif de communication, de l'émission de données de la sous-trame actuelle consiste à :
déterminer, par le dispositif de communication, l'émission de données de la première sous-trame d'après le deuxième numéro de sous-trame et la deuxième configuration de liaison montante/liaison descendante.

9. Procédé pour déterminer une émission de données selon la revendication 6, le procédé, avant la détermination, par le dispositif de communication, de l'émission de données de la sous-trame actuelle, comprenant également les étapes consistant à :
obtenir, par le dispositif de communication, une deuxième configuration de liaison montante/liaison descendante ; dans lequel procédé
la détermination, par un dispositif de communication, qu'une sous-trame actuelle appartient à un premier segment de temps consiste à :
déterminer, par le dispositif de communication, que la sous-trame actuelle est la première sous-trame du premier segment de temps ; et
de manière correspondante, la détermination, par le dispositif de communication, de l'émission de données de la sous-trame actuelle consiste à :
déterminer, par le dispositif de communication, l'émission de données de la première sous-trame d'après la deuxième configuration de liaison montante/liaison descendante.

10. Procédé pour déterminer une émission de données selon l'une quelconque des revendications 6 à 9, dans lequel :
le dispositif de communication est un équipement d'utilisateur ou une station de base.
